# DEMANDE DE BREVET EUROPEEN

(11) **EP 1 679 265 A1**
(43) Date de publication de la demande: **12.07.2006**
(21) Numéro de dépôt: 05100053.7
(22) Date de dépôt: 06.01.2005
(51) Int. Cl.: B65D 35/10, B29D 23/20, B29C 53/42, B29C 31/00

(54) **Tube à section non-circulaire, son procédé de fabrication et dispositif pour sa mise en oeuvre**

(71) Demandeur: Aisapack Holding SA, 1896 Vouvry (CH)
(72) Inventeur: Keller, Gerhard, 1896 Vouvry (CH); Roy, Hugues-Vincent, 1896 Vouvry (CH); Thomasset, Jacques, 1896 Vouvry (CH)
(74) Mandataire: Besse, François

(57) **Abrégé**

Emballage souple de forme essentiellement tubulaire comprenant une jupe (2) obtenue à partir d'une feuille mono- ou multicouche, une tête (3) et optionnellement un bouchon (4), ladite tête (3) étant fixée, de préférence par soudage, à ladite jupe, ledit emballage étant destiné à contenir un produit semi-liquide ou pâteux qui sort sous la pression des doigts; caractérisé par le fait que la tête (3), au niveau de sa zone de fixation avec la jupe (2), a une section non-circulaire.

## Description

### Domaine de l'invention

La présente invention se situe dans le domaine des emballages de forme tubulaire destinés à contenir, par exemple, de la pâte dentifrice, des produits cosmétiques ou alimentaires.
Plus précisément, elle se rapporte aux tubes obtenus à partir d'un film laminé enroulé et soudé.

### Etat de la technique

On connaît plusieurs procédés de fabrication de tubes souples dits "tubes laminés".
A titre d'exemple, on peut citer le brevet américain US 4 123 312 de Schmid & Jeker.

De manière générale, un tube laminé réalisé par assemblage de composants préfabriqués comprend les éléments suivants : une jupe, une tête et un bouchon.

La tête a sensiblement la forme d'un tronc de cône creux sur lequel se situe un cylindre formant le col étroit et dont la face externe peut être filetée afin de recevoir un bouchon qui vient s'y visser. Alternativement, la face externe du col étroit n'est pas filetée, le bouchon venant se fixer par simple pression. Généralement la tête et le bouchon sont des pièces plastiques réalisées par injection moulage ou compression moulage.

La jupe, une fois formée, a une forme sensiblement tubulaire. Elle est produite à partir de rouleaux de laminé mono- ou multicouche, avec ou sans feuille d'aluminium et imprimé ou vierge.

Un procédé courant de fabrication de tubes laminés comprend les étapes suivantes :
- A partir d'un rouleau de film laminé, on enroule et soude autour d'un mandrin de section circulaire un laminé de manière à former un tube cylindrique sans fin. Le cylindre est ensuite découpé en jupes de longueur déterminée.
- Les têtes et bouchons sont automatiquement chargés dans le dispositif.
- Les têtes sont fixées par soudage aux jupes.
- Les bouchons sont fixés sur les têtes.

Il existe aussi des procédés où un ou plusieurs éléments sont produits lors de l'assemblage.

La réalisation de tubes laminés par assemblage de composés préfabriqués offre l'avantage de pouvoir trier et éliminer les composants ne correspondant pas aux critères de qualité avant les étapes d'assemblage. Ainsi ce mode de réalisation de tubes laminés permet d'obtenir des tubes de meilleure qualité et avec des rendements supérieurs.

Les têtes de tubes laminés de l'état de la technique se caractérisent par une section circulaire. A fortiori, les dispositifs de l'état de la technique ne peuvent fonctionner qu'avec des têtes à section circulaire.

Les tubes laminés de l'état de la technique présentent cependant quelques inconvénients. Par exemple, lorsqu'ils sont disposés dans une surface commerciale, la surface de la jupe rendue visible au consommateur, c'est à dire la surface qui se présente directement à lui sans qu'il doive tourner le tube, est relativement petite.

Il existe donc un besoin d'avoir une plus grande surface de jupe directement visible.

### Résumé de l'invention

La présente invention à le mérite de remédier notamment à l'inconvénient précité.
A cet effet, elle concerne un tube laminé caractérisé par une tête présentant une section non-circulaire.

Avantageusement, la section de la tête est de forme ovale. Il en résulte que la jupe présente également, sur pratiquement l'ensemble de sa longueur, une section ovale, donc une surface de jupe directement visible qui est plus grande que celle offerte par un tube dont la section est circulaire.

La présente invention concerne également des procédées et des dispositifs permettant de réaliser le tube précité.

### Description détaillée de l'invention

L'invention sera mieux comprise ci-dessous au moyen d'un exemple de tube laminé possédant une tête avec section ovale, c'est-à-dire de forme ayant une courbure fermée et ayant deux diamètres inégaux.

Il va de soi que l'invention ne se limite pas aux tubes laminés possédant une tête à section ovale, mais à n'importe quel tube laminé possédant une tête à section non-circulaire.

L'exemple ci-dessous est illustré par les figures suivantes :
- Figure 1: Présentation d'un tube selon l'invention.
- Figure 2: Dessin de détail de la zone de soudure entre la jupe et la tête de tube.
- Figure 3a: Vue dans le plan perpendiculaire à l'axe de la jupe de la zone de soudage entre la jupe et la tête de tube
- Figure 3b: Dessin de détail de la zone de recouvrement du laminé formant la jupe.
- Figure 4: Un 1^{er} dispositif selon l'invention pour le formage et le transfert de la jupe sur un mandrin ovale.
- Figure 5: Coupe selon l'axe AA du 1^{er} dispositif selon l'invention présenté en figure 4.
- Figure 6: Un 2^{e} dispositif selon l'invention pour l'orientation de jupe sur un mandrin ovale.

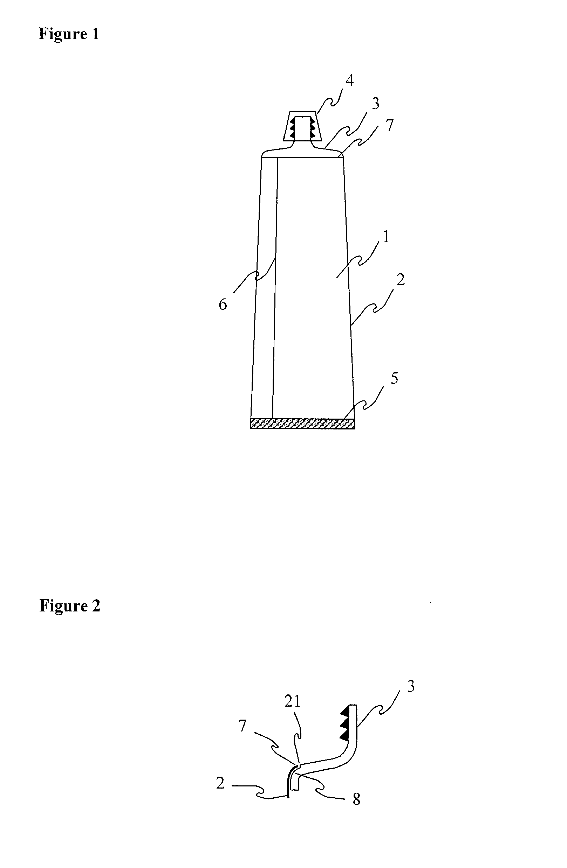

Le tube laminé (1) illustré sur la figure 1 se compose d'une jupe (2), d'une tête (3) et d'un bouchon (4); une fermeture plate (5) étant formée vers l'extrémité du tube (1) qui est opposée à celle où se situe le bouchon (4). La jupe (2) comporte une soudure longitudinale (6) sur toute sa longueur. La jupe (2) est soudée à la tête (3) sur tout son extrémité supérieure (7).

La figure 2 présente de manière détaillée la zone de soudure entre la jupe (2) et la tête de tube (3). La jupe (2) recouvre la tête (3) sur une zone (8) ayant un rayon de courbure R. Cette zone est délimitée en sa partie supérieure par un décrochement (21) permettant de positionner la jupe (2). Pour des raisons esthétiques, il est préférable de veiller à ce que l'extrémité supérieure (7) de la jupe soit située dans un plan perpendiculaire à l'axe de la jupe cylindrique. Ceci peut être réalisé en veillant à ce que le rayon de courbure de cette zone de recouvrement (8) ait une valeur constante sur tout le pourtour de la tête de tube et à ce que le décrochement (21) soit bien dans un plan perpendiculaire à l'axe de la jupe (2).

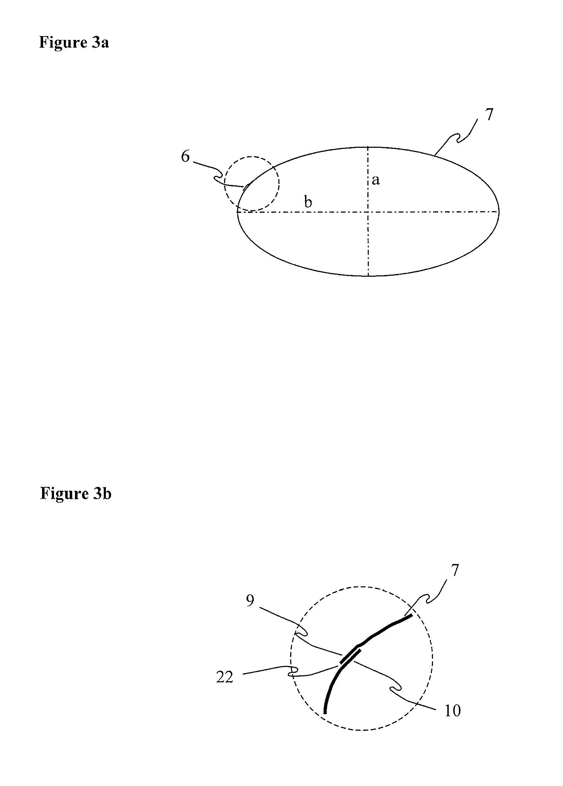

La figure 3a présente une vue de l'extrémité de la jupe (7) dans un plan perpendiculaire à l'axe de la jupe. Dans la figure 3a, la tête de l'emballage selon l'invention a une section ovale caractérisé par un demi-petit axe **a** et un demi-grand axe **b**. La soudure longitudinale de la jupe (6) est détaillée sur la figure 3b. Cette soudure est composée d'une zone de recouvrement comportant la partie soudée du laminé supérieur (9) et la partie soudée du laminé inférieur (10). L'extrémité du laminé supérieur (9) délimite la zone visible (22) de la soudure longitudinale.

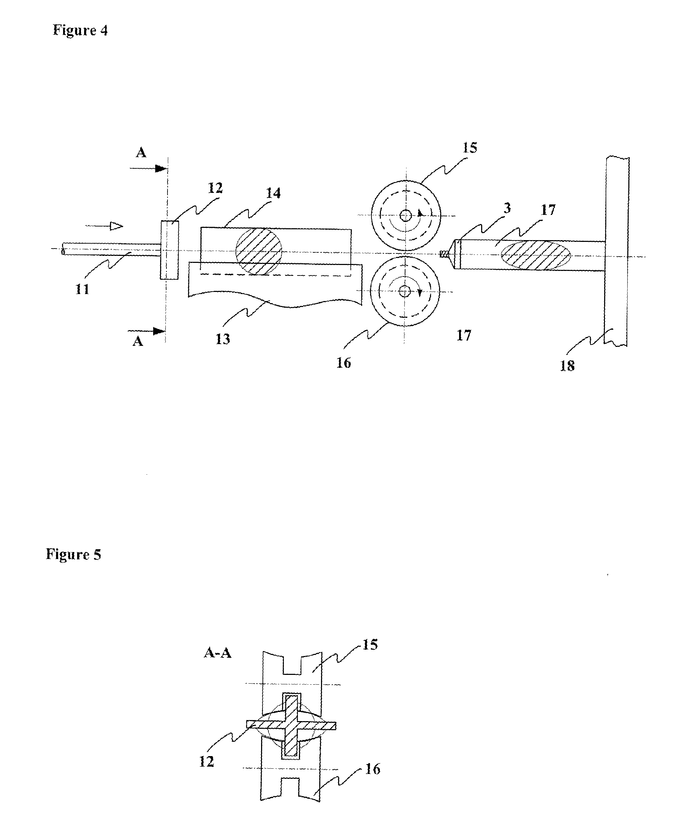

La figure 4 présente un exemple de partie de dispositif permettant de former des tubes laminés ovales selon l'invention. Cette partie concerne le point particulièrement critique du formage de la jupe ovale (2) à partir de jupe circulaire (14), ainsi que le transfert de cette jupe ovale (2) sur un mandrin ovale (17). Le dispositif est constitué d'un poussoir de jupe (11) ayant une tête de poussoir (12) en forme de croix dont les branches sont inégales, d'un support concave (13) équipé de moyens appropriés pour maintenir la jupe en position (tels qu'un système vacuum), de rouleaux de formage (15 et 16) tournant selon un axe perpendiculaire à la feuille et d'un mandrin (17) positionné sur un support de mandrin (18).

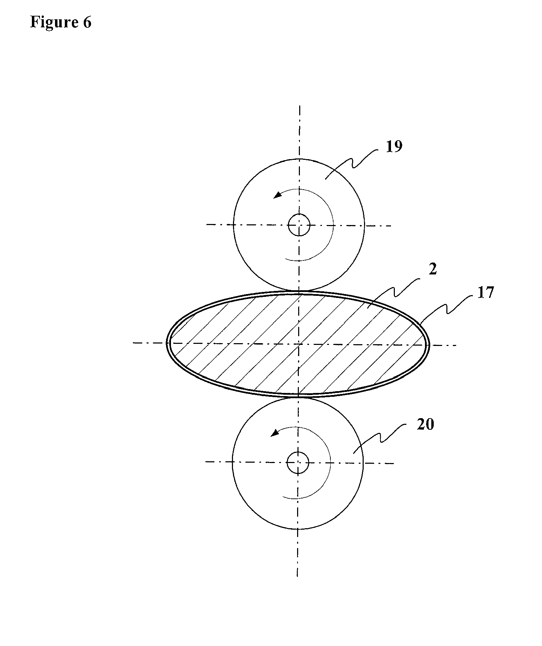

La figure 5 présente une coupe selon le plan A-A de la tête de poussoir (12). Cette tête de poussoir (12) est en forme de croix dont les branches sont de longueurs inégales de manière à pouvoir passer entre les 2 rouleaux de formage (15 et 16). Les branches de cette tête de poussoir (12) une longueur légèrement supérieure aux demi-axes de la section de la tête de manière à assurer le contact entre ces branches et le bord de la jupe après formage.

La figure 6 présente un autre exemple de partie de dispositif permettant de former des tubes laminés ovales selon l'invention. Cette partie concerne le point particulièrement critique de l'orientation de la jupe (2) sur le mandrin ovale (17). Cette orientation est réalisée à l'aide de moyens appropriés tels que des rouleaux d'entraînements (19), mais peut aussi être obtenue à l'aide de courroies ou de patins.

Un tube laminé ovale selon la présente invention offre l'avantage d'offrir une grande surface presque plane pouvant contenir une décoration imprimée rendant l'emballage particulièrement attractif pour le consommateur. Pour que cet effet attractif soit encore plus performant il est favorable de positionner la soudure longitudinale du laminé (7) en une zone étant peu visible par l'oeil du consommateur. Selon la présente invention il se révèle particulièrement adéquat de positionner cette soudure longitudinale dans une zone proche du rayon de courbure minimale de la tête du tube et plus précisément à une distance du grand axe de la section ovale de la jupe inférieure à √2·α/2 où **a** est le demi-petit axe de la section ovale de la jupe.
Pour les mêmes raisons visuelles, selon la présente invention il aussi particulièrement recommandé de positionner le recouvrement du laminé supérieur (9) et inférieur (10) dans la zone de soudage longitudinal (6) de manière à ce que la partie visible de la soudure (22) regarde en direction de la zone où le rayon de courbure de la jupe soit minimal.

La description d'un procédé et d'un dispositif pour produire un tube laminé ovale selon la présente invention apparaît de manière plus claire en présentant les différentes étapes de production :
- a): A partir du rouleau de film laminé, le laminé est enroulé et soudé de manière à former un cylindre circulaire droit sans fin. Ensuite ce cylindre est découpé en jupe de longueur déterminée.
- b): Les têtes de section ovale et bouchons sont automatiquement chargés dans l'appareillage de confection de tube laminé. Les têtes ovales sont positionnées à l'extrémité de mandrins de section ovales (17).
- c): Les jupes circulaires sont orientées en angle par rapport à leur axe de symétrie pour positionner l'emplacement de la soudure longitudinale (6).
- d): Les jupes circulaires préalablement orientées sont déformées en cylindre droit de section ovale et sont chargées sur les mandrins de section ovale (17) à l'aide de moyens appropriés.
- e): Sur les mandrins ovales, les jupes sont à nouveau orientées de manière à les positionner de manière exacte par rapport aux têtes à l'aide de moyens appropriés.
- f): Les têtes sont assemblées et soudées aux jupes.
- g): Les bouchons sont vissés ou clipsés sur les têtes de tubes laminés.

Une méthode de formage de tube ovale (étape d de la méthode ci-dessus) selon l'invention et à l'aide du dispositif présenté en figure 4 et 5 comporte les étapes suivantes :
- Charger une jupe circulaire (14) sur un support concave (13).
- Pousser la jupe circulaire (14) dans la zone de formage à l'aide d'un poussoir (11).
- Former la jupe en cylindre ovale à l'aide des rouleaux de formage (15) et (16) tout en la poussant à l'aide du poussoir (11). Les rouleaux de formage (15 et 16) sont de forme concave de manière à former la jupe selon la même forme ovale que la tête de tube (3).
- Faire glisser la jupe ovale sur la tête ovale (3) et sur le mandrin ovale (17) à l'aide du poussoir (11).

Pour le positionnement de cette soudure longitudinale par rapport à la tête de tube, il est possible d'orienter en angle la jupe avant son chargement sur le mandrin ovale si la jupe est encore un cylindre de section circulaire. Cette orientation peut être réalisée selon des moyens bien connus de l'homme du métier. Mais pour une orientation précise il est nécessaire de procéder à une seconde orientation lorsque la jupe est positionnée sur le mandrin ovale, car le processus de transfert et de formage ne garantit pas un maintien précis de l'orientation. Cette orientation sur mandrin ovale est particulièrement critique et selon la présente invention peut être réalisée de manière avantageuse si les moyens appropriés pour déplacer la jupe sont situés dans la zone où le rayon de courbure de la jupe est maximal. En effet les forces de frottement de la jupe sur le mandrin sont réduites lorsque le rayon de courbure est maximal.

Un autre procédé et un second dispositif pour produire un tube laminé ovale selon la présente invention est décrit à l'aide du mode opératoire ci-dessous :
- h): A partir du rouleau de film laminé, le laminé est découpé en feuilles de longueur déterminée.
- i): Ces feuilles sont enroulées sur un premier mandrin de section ovale et soudées de manière à former des jupes cylindriques de section ovale.
- j): Les têtes de section ovale et bouchons sont automatiquement chargées dans l'appareillage de confection de tube laminé. Les têtes ovales sont positionnées à l'extrémité d'un second mandrin de section ovale (17).
- k): Les jupes ovales sont transférées sur du premier mandrin vers le deuxième mandrin de section ovale (17) à l'aide de moyens appropriés.
- 1): Sur les mandrins ovales, les jupes sont orientées de manière à les positionner de manière exacte par rapport aux têtes à l'aide de moyens appropriés.
- m): Les têtes sont assemblées et soudées aux jupes.
- n): Les bouchons sont vissés ou clipsés sur les têtes de tubes laminés.

Il va sans dire que l'invention ne se limite pas aux tubes laminés ovales décrits dans les modes de réalisation décrits précédemment, mais concerne tous les tubes laminés de section non-circulaire produits par assemblage de composants. A titre d'exemple faisant également partie du domaine de l'invention, on peut citer les tubes laminés de section polygonale (triangle, carré, pentagone, etc....).

De même, l'invention ne se limite pas aux dispositifs décrits précédemment.

## Revendications

1. Emballage souple de forme essentiellement tubulaire comprenant une jupe obtenue à partir d'une feuille mono- ou multicouche, une tête et optionnellement un bouchon, ladite tête étant fixée, de préférence par soudage, à ladite jupe, ledit emballage étant destiné à contenir un produit semi-liquide ou pâteux qui sort sous la pression des doigts ;
**caractérisé par le fait que** la tête, au niveau de sa zone de fixation avec la jupe, a une section non-circulaire.

2. Emballage selon la revendication 1 **caractérisé par le fait que** ladite section est ovale.

3. Emballage selon la revendication 2 **caractérisé par le fait que** l'extrémité de la soudure longitudinale qui est en contact avec la tête se situe à l'endroit, voire à proximité de l'endroit, où le rayon de courbure de ladite section est minimal.

4. Emballage selon la revendication précédente **caractérisé par le fait que** la soudure longitudinale de ladite jupe formée par le recouvrement des deux bords de la feuille mono- ou multicouche, est disposée de manière à ce que le bord de ladite feuille formant la partie supérieure de ladite soudure regarde en direction de la zone où le rayon de courbure de ladite jupe est minimal.

5. Emballage selon l'une quelconque des revendications 2 à 4 **caractérisé par le fait que** ladite jupe comporte une fermeture plate sur son extrémité qui est opposée à celle où se situe ladite tête et que ladite soudure plate soit parallèle à la direction du grand axe de la section de ladite tête.

6. Emballage selon la revendication 1 **caractérisé par le fait que** la section de la tête est de forme polygonale.

7. Emballage selon l'une quelconque des revendications précédentes **caractérisé par le fait que** la zone de contact jupe-tête se situe dans un plan perpendiculaire à l'axe principal de la jupe.

8. Procédé pour la production d'emballages tels que décrits dans la revendication 1
**caractérisé par** les étapes successives suivantes :
• Préparation de jupes autour d'un mandrin de section circulaire.
• Chargement des têtes de section non-circulaire à l'extrémité d'un mandrin de section similaire à celle des têtes.
• Déformation et transfert des jupes sur le mandrin de section non-circulaire.
• Fixation desdites têtes aux dites jupes.
• Fixation desdits bouchons sur lesdites têtes.

9. Procédé selon la revendication précédente **caractérisé par** le fait lesdites jupes sont orientées en angle par rapport à leur axe de symétrie pour positionner l'emplacement de la soudure longitudinale.

10. Procédé selon la revendication précédente **caractérisé par le fait que** l'orientation en angle est effectuée sur lesdites jupes circulaires avant l'étape de déformation et de transfert.

11. Procédé selon l'une quelconque des revendications 9 ou 10 **caractérisé par le fait que** l'orientation en angle desdites jupes est effectuée lorsque lesdites jupes sont positionnées sur ledit mandrin de section non-circulaire.

12. Procédé selon l'une quelconque des revendications 8 à 11 **caractérisé par le fait que** ladite déformation s'effectue par le passage de ladite jupe dans une zone de formage.

13. Procédé pour la production d'emballages tels que décrits dans la revendication 1
**caractérisé par** les étapes successives suivantes :
• Préparation de jupes autour d'un mandrin de section non-circulaire.
• Chargement des têtes de section non-circulaire et bouchons à l'extrémité d'un mandrin de section similaire à celle desdites têtes .
• Déplacement des jupes vers les têtes.
• Fixation des têtes aux jupes.

14. Procédé selon la revendications 13 **caractérisé par** le fait lesdites jupes sont orientées en angle par rapport à leur axe de symétrie pour positionner l'emplacement de la soudure longitudinale.

15. Procédé selon la revendication précédente **caractérisé par le fait que** l'orientation en angle desdites jupes est effectuée lorsque lesdites jupes sont positionnées sur ledit mandrin de section non-circulaire.

16. Dispositif pour la fabrication d'un emballage tel que défini à la revendication 1 comprenant :
- un mandrin formateur de jupe de section circulaire,
- des moyens pour déplacer des jupes le long dudit mandrin,
- des moyens pour charger des têtes de tube,
- des moyens pour fixer les jupes aux têtes,
**caractérisé par le fait :**
- **que** lesdits moyens pour charger les têtes sont adaptés pour recevoir des têtes à section non-circulaire,
- **qu'**il comprend des moyens pour déformer les jupes préalablement à leur fixation aux têtes.

17. Dispositif selon la revendication précédente comprenant en outre un mandrin de section similaire à celle des têtes qui est situé après lesdits moyens pour déformer les jupes.

18. Dispositif selon l'une quelconque des revendications 16 ou 17 comprenant des moyens pour orienter les jupes préalablement à leur fixation aux têtes.

19. Dispositif selon l'une quelconque des revendications 15 ou 18 **caractérisé en ce que** lesdits moyens pour orienter les jupes sont situés dans les zones où le rayon de courbure de la jupe est maximal.

20. Dispositif pour la fabrication d'un emballage tel que défini à la revendication 1 comprenant :
- un mandrin formateur de jupe,
- des moyens pour déplacer des jupe le long dudit mandrin,
- des moyens pour charger des têtes de tube,
- des moyens pour fixer les jupes aux têtes,
**caractérisé par le fait :**
- **que** ledit mandrin formateur a une section non-circulaire,
- **que** lesdits moyens pour charger les têtes sont adaptés pour recevoir des têtes à section non-circulaire,

21. Dispositif selon la revendication 20 comprenant des moyens pour orienter les jupes préalablement à leur fixation aux têtes.

22. Dispositif selon la revendication 21 **caractérisé en ce que** lesdits moyens pour orienter les jupes sont situés dans les zones où le rayon de courbure de ladite jupe est maximal.
